# EUROPÄISCHE PATENTSCHRIFT

(11) **EP 4 193 238 B1**
(45) Veröffentlichungstag und Bekanntmachung des Hinweises auf die Patenterteilung: **11.11.2026**
(21) Anmeldenummer: 21755756.0
(22) Anmeldetag: 05.08.2021
(51) Int. Cl.: G06F 1/16, H04M 1/72412, H04M 1/72409

(54) **MOBILE UND MODULARE KOMMUNIKATIONS- UND DATENVERARBEITUNGSEINRICHTUNG MIT COMPUTER-FUNKTIONALITÄT**
MOBILE AND MODULAR COMMUNICATION AND DATA PROCESSING DEVICE WITH COMPUTER FUNCTIONALITY
DISPOSITIF MOBILE ET MODULAIRE DE COMMUNICATION ET DE TRAITEMENT DE DONNÉES AYANT UNE FONCTIONNALITÉ INFORMATIQUE

(30) Priorität: 06.08.2020 DE 102020210006
(43) Veröffentlichungstag der Anmeldung: 14.06.2023
(73) Patentinhaber: ecom instruments GmbH, 97959 Assamstadt (DE)
(72) Erfinder: HARTLEB, Jörg, 97959 Assamstadt (DE); WESSELS, Roolf, 97990 Weikersheim (DE)
(74) Vertreter: BRP Renaud & Partner mbB Rechtsanwälte Patentanwälte Steuerberater
(86) Internationale Anmeldenummer: PCT/EP2021/071927
(87) Internationale Veröffentlichungsnummer: WO 2022/029258

(56) Entgegenhaltungen:
- US-A1- 2004 233 930
- US-A1- 2016 106 370

## Beschreibung

Die vorliegende Erfindung betrifft eine Anordnung mit einen mobilen, insbesondere von einem Benutzer am Körper tragbaren bzw. mitführbaren, modularen Kommunikations- und Datenverarbeitungseinrichtung mit Computer-Funktionalität und mit wenigstens einer mit der Einrichtung in Kommunikationsverbindung stehenden oder in Kommunikationsverbindung bringbaren Peripherie-Komponente.

Sogenannte "Smart-Devices" wie beispielsweise Smart-Phones, Smart-Watches oder Tablet-Computer - im Folgenden auch als "Smart-Geräte" oder "Geräte" bezeichnet - sind in der Regel mit einer Vielzahl von Funktionen ausgestattet, die anwendungsspezifisch festgelegt sind. Besagter Gerätetyp baut auf einer standardisierten Prozessorplattform mit darauf abgestimmtem Betriebssystem auf. Die Gerätearchitektur ist dafür ausgelegt, hochintegrierte multifunktionale Geräte mit Multi- und Social-Media-Schwerpunkt bereitzustellen. Solche Geräte sind in den Dokumenten US 2004/233930 A1 und US 2016/106370 A1 offenbart.

Die hohe Integrationsdichte des herkömmlichen Smart-Geräts geht jedoch mit einer Reihe von Nachteilen für den Benutzer einher. Insbesondere werden in der Praxis oftmals Funktionalitäten bereitgestellt, die vom Nutzer gar nicht benötigt werden. Die nicht genutzten bzw. gewünschten Funktionalitäten führen für den Benutzer zu unnötigen Kosten bei der Beschaffung des Smart-Geräts, da das Gerät ohne diese Funktionalitäten kostengünstiger herzustellen wäre. Darüber hinaus erhöhen sich mit der Anzahl an Funktionen üblicherweise sowohl das Eigengewicht als auch der Energieverbrauch, was sich für ein mobiles Gerät ebenfalls als nachteilig erweist.

Im Bereich der gewerblichen bzw. industriellen Nutzung von Smart-Geräten werden vorhandene Multimedia-Eigenschaften des Geräts beispielsweise für sog. "Augmented-Reality"-Anwendungen genutzt. Das Display des Geräts kann aber auch zur Visualisierung von Prozessdaten oder zur Bearbeitung von Checklisten eingesetzt werden.

Aus den verschiedenen Anwendungsfeldern ergeben sich je nach Gerätetyp jedoch verschiedene Nachteile. So kann das Display des Geräts für die Prozessvisualisierung bestimmter Prozesse zu klein sein. Für bestimmte Anwendungen kann wiederum gar kein Display erforderlich sein.

Wie voranstehend erläutert sind herkömmliche Smart-Geräte also für unterschiedliche Anwendungen optimiert. Dies bedeutet im Umkehrschluss, dass ein Anwender für verschiedene Anwendungen mehrere Smart-Geräte unterschiedlichen Typs bzw. unterschiedlicher Bauform benötigt, aus welchen er für die jeweils momentan benötigte Anwendung das optimale Gerät auswählen kann. Die Beschaffung mehrerer Smart-Geräte ist aber kostenintensiv. Darüber hinaus muss der Nutzer in der Praxis die zur Auswahl stehenden Smart-Geräte mit sich führen, was nicht nur unter Kosten- Gewichtsaspekten mit Nachteilen verbunden sein kann.

Es ist daher eine Aufgabe der vorliegenden Erfindung, eine verbesserte Ausführungsform für ein Smart-Gerät zu schaffen, in welchem die oben genannten Nachteile adressiert sind.

Diese Aufgabe wird durch den Gegenstand der unabhängigen Patentansprüche gelöst. Bevorzugte Ausführungsformen sind Gegenstand der abhängigen Patentansprüche.

Grundidee der Erfindung ist demnach, ein Smart-Gerät für den Nutzer tragbar auszubilden und durch eine zentrale Kommunikations- und Datenverarbeitungseinrichtung im Folgenden mit "Einrichtung" abgekürzt und verschiedene und damit insbesondere drahtlos oder drahtgebunden verbundener Ein- und Ausgabegeräte - sog. "Peripheriegeräte" bzw. "Peripherie-Komponenten" - zu realisieren, die im Bedarfsfall, insbesondere anwendungsspezifisch, mit der zentralen Kommunikations- und Datenverarbeitungseinrichtung verbunden bzw. wieder von dieser getrennt werden können.

Die Einrichtung kann hierzu wie ein herkömmlicher tragbarer Computer eine Steuerungs- und Speichereinheit aufweisen. In der Speichereinheit können in herkömmlicher Weise Daten abgelegt sein, die von der Steuerungseinheit verarbeitet werden können. Die Einrichtung kann also bzgl. Datenverarbeitung und Datenspeicherung mit der Funktionalität eines herkömmlichen tragbaren Computers ausgestattet sein.

Der Nutzer der Einrichtung, also des erfindungsgemäßen Smart-Geräts, kann dabei je nach Anwendungszweck die passende Peripherie und dann auch leichtere Peripherie mit sich führen und mit der Einrichtung verbinden. Auf die Mitnahme nicht benötigter Peripherie kann hingegen verzichtet werden. Daraus ergeben sich Vorteile bei der Energieversorgung des Smart-Geräts, da nicht benötigte Peripherie nicht mit elektrischer Energie aus der Einrichtung versorgt werden muss. Darüber hinaus muss der Nutzer nicht unnötiges Gewicht mit sich führen.

Die mitgeführte Peripherie kann dabei am Körper, insbesondere an verschiedenen am Körper getragenen Kleidungsstücken des Nutzers, verteilt werden. Dies erweist sich insbesondere - aber nicht nur - als vorteilhaft, wenn die Peripherie auf drahtlosem Wege mit der Einrichtung verbunden wird. Dies erleichtert das mobile Mit-sich-führen des Smart-Geräts und erhöht aufgrund des auf den Körper verteilten Gesamtgewichts des Smart-Geräts den Tragekomfort.

Unabhängig von der in einem bestimmten Einsatzfall ausgewählten Kombination aus Einrichtung und mitzuführenden Peripherie-Komponenten ermöglicht das erfindungsgemäße Smart-Gerät bereits bei der Beschaffung eine anwendungsspezifische Auswahl der für spätere Praxiseinsätze benötigten Peripherie-Komponenten. Benötigt beispielsweise der Nutzer für keine seiner geplanten Anwendungen ein Display, so kann er auf die kostspielige Beschaffung entsprechender Peripherie-Komponenten verzichten.

Zusätzlich von den sich für den Nutzer unmittelbar ergebenden, voranstehend erläuterten Vorzügen der erfindungsgemäßen Lösung ergeben sich weitere Vorteile. Aufgrund des modularen Aufbaus des Smart-Geräts können die technische Weiterentwicklung der Einrichtung und auch die technische Weiterentwicklung der einzelnen Peripheriegeräte zumindest in Teilen unabhängig voneinander erfolgen. Dies bedeutet, dass die technische "Evolution" des gesamten Smart-Geräts schneller erfolgen kann als bei einem herkömmlichen, nicht-modularen System. Da der Produkt-Lebenszyklus der Peripherie größer ist als jener des Smart-Geräts, bleibt der Benutzer für einen längeren Zeitraum im Besitz eines Geräts, welches sich technisch auf dem aktuellen Stand befindet. Nutzer können so mit geringerem Aufwand auf dem aktuellen Stand bleiben. Außerdem sinken über die Zeit die Kosten für die Weiterentwicklung.

Im Ergebnis erlaubt es der hier vorgestellte erfindungsgemäße, modulare Ansatz für ein Smart-Gerät, dieses hinsichtlich der vom mobilen Nutzer geforderten Anwendung(en) in vielerlei Hinsicht zu optimieren.

Eine erfindungsgemäße, mobile modulare Kommunikations- und Datenverarbeitungseinrichtung mit Computer-Funktionalität (Einrichtung) umfasst ein Gehäuse, welches einen Gehäuseinnenraum umgibt. Im Gehäuseinnenraum ist eine Datenverarbeitungseinheit angeordnet, welche wiederum eine Steuerungseinheit und eine Speichereinheit aufweist. In der Speichereinheit können Daten abgespeichert sein, die von der Steuerungseinheit ausgeführt werden können. Dabei kann somit von der Einrichtung ein Computerprogrammprodukt (also "Softwarecode") insbesondere ein Software-Betriebssystem ausgeführt werden kann.

Ferner ist wenigstens eine mit der Datenverarbeitungseinheit in Kommunikationsverbindung stehende drahtlose Kommunikationsschnittstelle zum Erzeugen einer drahtlosen Kommunikationsverbindung zwischen der Datenverarbeitungseinheit und wenigstens ein externes Peripheriegerät vorhanden. Weiterhin ist wenigstens eine mit der Datenverarbeitungseinheit in Kommunikationsverbindung stehende, drahtgebundene Kommunikationsschnittstelle zum Erzeugen einer drahtgebundenen Kommunikationsverbindung zwischen der Datenverarbeitungseinheit und wenigstens einem externen Peripheriegerät oder/und einem externen Netzwerk vorhanden. Außerdem umfasst die Einrichtung einen an eine externe elektrische Energieversorgung anschließbaren Versorgungsanschluss zum Versorgen zumindest der Datenverarbeitungseinheit mit von außen bereitgestellter elektrischer Energie. Schließlich umfasst die Einrichtung einen wiederaufladbaren Batteriespeicher zum Speichern von elektrischer Energie zumindest für die Datenverarbeitungseinheit.

Gemäß einer bevorzugten Ausführungsform weist die Einrichtung eine zumindest teilweise am Gehäuse ausgebildete Benutzerschnittstelle auf, die mit der Datenverarbeitungseinheit zur Benutzerinteraktion in Kommunikationsverbindung steht. Dies erlaubt es dem Benutzer der Einrichtung, diese auf komfortable Weise zu steuern bzw. mit dieser zu kommunizieren.

Besonders zweckmäßig umfasst die Benutzerschnittstelle eine am Gehäuse vorgesehene Anzeigeeinrichtung, mittels welcher wenigstens ein den Betriebszustand der Einrichtung, insbesondere der Datenverarbeitungseinheit, charakterisierender Parameter angezeigt werden kann oder angezeigt wird.

Zweckmäßig ist dieser wenigstens eine Parameter durch einen oder mehrere der folgenden Betriebszustände charakterisiert: a) eine Kommunikationsverbindung der Einrichtung mit wenigstens einer Peripherie-Komponente; b) eine Kommunikationsverbindung der Einrichtung bzw. der Datenverarbeitungseinheit mit einem externen Netzwerk; c) einen momentanen Ladezustand des wiederaufladbaren Batteriespeichers; d) eine Netzwerkverbindung der Einrichtung mit einem externen Netzwerk. Es versteht sich, dass weitere relevante Parameter angezeigt werden können. Prinzipiell können diese Parameter anwendungsspezifisch festgelegt werden.

Gemäß einer vorteilhaften Weiterbildung umfasst die Benutzerschnittstelle eine am Gehäuse vorgesehene Eingabeeinrichtung, mittels welcher die Datenverarbeitungseinheit und somit die Kommunikations- und Datenverarbeitungseinrichtung vom Benutzer durch entsprechende Eingaben gesteuert werden können.

Gemäß einer vorteilhaften Weiterbildung umfasst die Eingabeeinrichtung wenigstens ein vom Nutzer konfigurierbares Betätigungselement, so dass durch Betätigung des Betätigungselements ein Eingabesignal erzeugt wird, welches von der Eingabeeinrichtung an die Datenverarbeitungseinheit übertragbar ist. Das Betätigungselement kann in der Art einer herkömmlichen Taste ausgebildet sein, die außen am Gehäuse angeordnet sein kann, so dass sie vom Nutzer beim Mit-sich-Führen des Smart-Geräts auf komfortable Weise betätigt werden kann.

Besonders bevorzugt kann die drahtlose Kommunikationsschnittstelle eine WLAN- oder/und Bluetooth-Schnittstelle sein oder umfassen. Alternativ oder zusätzlich dazu kann die drahtgebundene Kommunikationsschnittstelle eine Ethernet-Schnittstelle sein oder umfassen. Mittels einer solchen drahtlosen Kommunikationsschnittstelle ist es einfach möglich, Daten mit der Einrichtung auszutauschen, also von dieser zu übertragen oder an diese zu übertragen.

Besonders bevorzugt ist das von der Einrichtung ausführbare Computerprogrammprodukt bzw. das von der Datenverarbeitungseinheit ausführbare Software-Betriebssystem so konfiguriert, dass es die Kommunikation der Einrichtung mit dem in Kommunikationsverbindung stehenden wenigstens einen Peripherie-Komponenten steuert.

Die Erfindung betrifft ferner eine Anordnung mit einer voranstehend vorgestellten, erfindungsgemäßen mobilen modularen Kommunikations- und Datenverarbeitungseinrichtung mit Computer-Funktionalität (Einrichtung), also mit einem voranstehend erläuterten Smart-Gerät. Die voranstehend erläuterten Vorteile übertragen sich daher auch auf die erfindungsgemäße Anordnung. Diese Anordnung umfasst wenigstens ein Peripheriegerät, welches über die drahtlose Kommunikationsschnittstelle oder über die drahtgebundene Kommunikationsschnittstelle mit der Datenverarbeitungseinheit in Kommunikationsverbindung steht.

Gemäß einer bevorzugten Ausführungsform umfasst die Anordnung ein mit der modularen Kommunikations- und Datenverarbeitungseinrichtung zur Datenübertragung, insbesondere drahtlos oder drahtgebunden, verbindbares stationäres Datenverarbeitungssystem. Das Datenverarbeitungssystem ist stationär ausgebildet, d.h. es ist nicht für den Nutzer der Einrichtung Kommunikations- und Datenverarbeitungseinrichtung tragbar bzw. mobil, also zum Mit-sich-Führen ausgebildet, sondern für einen stationären Betrieb ausgelegt. Das Datenverarbeitungssystem kann mit Funktionen ausgestattet sein, die für die Einrichtung nicht oder nur in deutlich geringerem Maße von Relevanz sind. Somit kann die Einrichtung besonders kompakt ausgelegt werden.

Besonders bevorzugt ist oder umfasst die wenigstens eine Peripherie-Komponente ein autonomes oder nicht-autonomes Display, insbesondere ein Touch-Display oder E-Ink-Display, oder/und ein Smart Glass oder/und eine Smart Watch oder/und eine Kamera oder/und einen Lautsprecher oder/und ein Hör-Sprechsystem, bevorzugt mit einem außen am Gehäuse vorgesehenen Mikrophon, oder/und ein Sensorsystem mit wenigstens einem Sensor zum Erfassen von Sensordaten, bevorzugt einen Lagesensor oder einen Positionssensor, oder/und eine Antenne oder/und ein "Energy-Harvest"-System;

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

Es zeigen, jeweils schematisch:
- Fig. 1: eine den Aufbau einer erfindungsgemäßen Einrichtung beispielhaft erläuternde Darstellung,
- Fig. 2: eine schematische Darstellung, welche die verschiedenen mit der Einrichtung verbindbaren Peripherie-Komponenten illustriert.

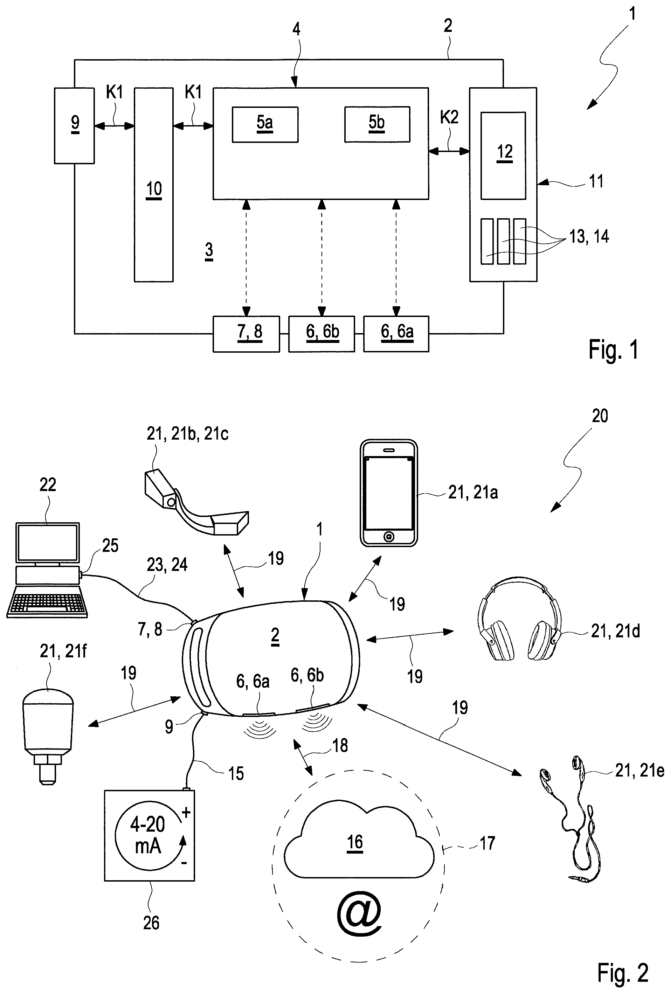

Figur 1 illustriert in grobschematischer Darstellung den Aufbau einer erfindungsgemäßen Kommunikations- und Datenverarbeitungseinrichtung 1 mit Computer-Funktionalität ("Einrichtung"). Die Einrichtung 1 ist modular und von einem Benutzer am Körper tragbar ausgebildet. Hierzu umfasst die Einrichtung 1 ein Gehäuse 2, welches einen Gehäuseinnenraum 3 umgibt. Das Gehäuse 2 ist so dimensioniert und ausgebildet, dass das Mitführen der Einrichtung 1 durch einen Benutzer an dessen Körper möglich ist. Hierzu ist das Gehäuse 2 insbesondere so dimensioniert, dass es komfortabel in der vom Benutzer getragenen Kleidung verstaut werden kann.

Im Gehäuseinnenraum 3 ist eine Datenverarbeitungseinheit 4 angeordnet, welche eine Steuerungseinheit 5a und eine Speichereinheit 5b umfasst. Von der Datenverarbeitungseinheit 4 ist ein Computerprogrammprodukt, also Software-Code, ausführbar. Insbesondere kann von der Datenverarbeitungseinheit 4 Betriebssystem-Software sowie anwendungsspezifische Software ausgeführt werden. Mittels der Datenverarbeitungseinheit 4 stellt die Einrichtung 1 somit die Funktionalität eines Computers bereit. Die Einrichtung 1 umfasst auch zwei mit der Datenverarbeitungseinheit 4 in Kommunikationsverbindung stehende drahtlose Kommunikationsschnittstellen 6 zum Erzeugen einer drahtlosen Kommunikationsverbindung zwischen der Datenverarbeitungseinheit 4 und einem oder mehreren in Figur 1 nicht gezeigten externen Peripheriegeräten. Eine der beiden drahtlosen Kommunikationsschnittstellen 6 ist im Beispiel der Figuren eine Bluetooth-Schnittstelle 6a, die andere Schnittstelle 6 eine WLAN-Schnittstelle 6b.

Zusätzlich umfasst die Einrichtung 1 eine mit der Datenverarbeitungseinheit 4 in Kommunikationsverbindung stehende drahtgebundene Kommunikationsschnittstelle 7 zum Erzeugen einer drahtgebundenen Kommunikationsverbindung zwischen der Datenverarbeitungseinheit 4 und einem in Figur 1 ebenfalls nicht gezeigten externen Peripheriegerät. Die drahtgebundene Kommunikationsschnittstelle 7 ist im Beispiel der Figuren eine Ethernet-Schnittstelle 8.

Am Gehäuse 2 ist ein elektrischer Versorgungsanschluss 9 angeordnet, welcher an eine externe Energieversorgung (nicht gezeigt) angeschlossen werden kann. Der elektrische Versorgungsanschluss 9 dient zum Versorgen der Datenverarbeitungseinheit 4 mit externer elektrischer Energie und ist hierzu elektrisch mit dieser verbunden (vgl. Pfeil K1 in Figur 1). Ferner ist im Gehäuseinnenraum 3 ein wiederaufladbarer Batteriespeicher 10 vorgesehen, der elektrisch sowohl mit dem Versorgungsanschluss 9 als auch mit der Datenverarbeitungseinheit 4 verbunden sein kann. Der Batteriespeicher 10 dient zum Speichern von elektrischer Energie, welche zum Betrieb der Einrichtung 1, insbesondere der Datenverarbeitungseinheit 4, zur Verfügung steht, solange die Einrichtung 1 bzw. die Datenverarbeitungseinheit 4 nicht an die externe Energieversorgung angeschlossen ist.

Wie Figur 1 schematisch veranschaulicht, kann die Einrichtung 1 eine teilweise am Gehäuse 2 ausgebildete Benutzerschnittstelle 11 aufweisen, mittels welcher die Datenverarbeitungseinheit 4 vom Benutzer der Einrichtung 1 gesteuert werden kann. Hierzu steht die Benutzerschnittstelle 11 mit der Datenverarbeitungseinheit 4 in Kommunikationsverbindung (vgl. K2 in Figur 1).

Zum Zwecke der Benutzerinteraktion kann die Benutzerschnittstelle 11 eine außen am Gehäuse 2 vorgesehene Anzeigeeinrichtung 12 umfassen. Mittels der Anzeigeeinrichtung 12 können verschiedene, den momentanen Betriebszustand der Einrichtung 1 bzw. der Datenverarbeitungseinheit 4 charakterisierende Parameter angezeigt werden. Die Benutzerschnittstelle 11 kann eine außen am Gehäuse 2 vorgesehene Eingabeeinrichtung 13 umfassen, mittels welcher die Datenverarbeitungseinheit 4 vom Benutzer gesteuert werden kann.

Besagter Parameter kann einen oder mehrere Betriebszustände der Einrichtung 1 charakterisieren. Insbesondere kann der Parameter eine Kommunikationsverbindung der Einrichtung 1 mit einer oder mehreren der Peripherie-Komponenten 21 charakterisieren. Ebenso kann der Parameter eine Kommunikationsverbindung der Einrichtung 1 bzw. der Datenverarbeitungseinheit 4 mit einem externen Netzwerk charakterisieren, mit welchem die Einrichtung 1 über die Ethernet-Schnittstelle 8 kommuniziert. Außerdem kann der Parameter einen momentanen Ladezustand des wiederaufladbaren Batteriespeichers charakterisieren.

Die Eingabeeinrichtung 13 wiederum kann ein oder mehrere Betätigungselemente 14 - beispielsweise in Form einer betätigbaren Taste aufweisen, so dass durch Betätigung eines bestimmten Betätigungselements 14 ein Eingabesignal erzeugt wird, welches zur Steuerung der Datenverarbeitungseinheit 4 von der Eingabeeinrichtung 13 an die Datenverarbeitungseinheit 4 übertragen werden kann.

Die Figur 2 veranschaulicht die Anbindung verschiedener Peripherie-Komponenten an die Einrichtung 1 durch Kommunikationsverbindung zwischen der jeweiligen Peripherie-Komponente und der Datenverarbeitungseinheit 4 über die drahtlose Kommunikationsschnittstelle 6 bzw. die drahtgebundene Kommunikationsschnittstelle 7.

Eine solche Anordnung 20 umfasst im Beispiel der Figur 2 die Kommunikations- und Datenverarbeitungseinrichtung 1 und mehrere Peripherie-Komponenten 21, welche über die drahtlose Kommunikationsschnittstelle 6 oder über die drahtgebundene Kommunikationsschnittstelle 7 mit der Datenverarbeitungseinheit 4 in Kommunikationsverbindung stehen.

Die Figur 2 veranschaulicht, welche Peripherie-Komponente 21 beispielsweise angebunden werden können. Beispielhaft in Figur 2 gezeigt sind ein autonomes oder nicht-autonomes Display 21a, welches beispielsweise ein Touch-Display oder ein E-Ink-Display sein kann. Denkbar ist - alternativ oder zusätzlich die Verwendung eines sog. "Smart"-Glass 21b oder einer Smart-Watch 21c. Denkbar ist auch die Verwendung einer Kamera (nicht gezeigt) sowie eines Mikrofons 21f, eines Lautsprechers 21d - im Beispiel der Figur 2 in Form eines Kopfhörers 21d sowie eines Hör-Sprechsystems 21e. Im Beispiel der Figur 2 sind alle genannten Peripherie-Komponenten 21 über eine drahtlose Kommunikationsverbindung in Figur 2 schematisch dargestellt durch mit dem Bezugszeichen 19 bezeichnete Pfeile - mit der drahtlosen Kommunikationsschnittstelle 6 bzw. der Bluetooth-Schnittstelle 6a - der Einrichtung 1 verbunden. Eine weitere drahtlose Kommunikationsschnittstelle 6, die als WLAN-Schnittstelle 6b ausgebildet ist, setzt die Einrichtung 1 über eine WLAN-Kommunikationsverbindung 18 mit dem Internet 17, in welchem Cloud-Dienste 16 bereitgestellt sind, in Kommunikationsverbindung.

Der elektrische Versorgungsanschluss 9 kann typischerweise zum Laden des elektrischen Batteriespeichers 10 über ein elektrisches Ladekabel 15 an eine externe elektrischen Energieversorgung 26 angeschlossen sein.

Die Anordnung 20 kann wie im Beispiel der Figur 2 angedeutet ein mit der modularen Kommunikations- und Datenverarbeitungseinrichtung 1 zur Datenübertragung, drahtlos oder drahtgebunden, verbindbares stationäres Datenverarbeitungssystem 22 aufweisen. Im Beispiel der Figur 2 kommuniziert das stationäre Datenverarbeitungssystem 22 über eine drahtgebundene Ethernet-Verbindung 23, die ein Ethernet-Kabel 24 umfasst - mit der drahtgebundenen Kommunikationsschnittstelle 7. Eine solche drahtgebundene Kommunikationsschnittstelle ist auch an dem stationären Datenverarbeitungssystem 22 vorgesehen und dort mit dem Bezugszeichen 25 bezeichnet.

An das stationäre Datenverarbeitungssystem 22 können von der Einrichtung 1 zur Weiterverarbeitung Daten an die Datenverarbeitungseinheit 4 der Einrichtung 1 übertragen werden und umgekehrt.

Das von der Datenverarbeitungseinheit 4 ausführbare Software-Betriebssystem ist so konfiguriert, dass es die Kommunikation der Datenverarbeitungseinheit mit den in Kommunikationsverbindung stehenden Peripherie-Komponenten steuert, insbesondere priorisiert.

## Patentansprüche

1. Anordnung (20),
- mit einer tragbaren, von einem Benutzer am Körper mitführbare, modulare Kommunikations- und Datenverarbeitungseinrichtung (1) mit Computer-Funktionalität, umfassend:
- ein einen Gehäuseinnenraum (3) begrenzenden Gehäuse (2), wobei im Gehäuseinnenraum (3) oder/und am Gehäuse (2) angeordnet sind:
- eine Datenverarbeitungseinheit (4), welche eine Steuerungseinheit (5a) und eine Speichereinheit (5b) umfasst, in welcher ein Computerprogrammprodukt ausführbar ist;
- wenigstens eine mit der Datenverarbeitungseinheit (4) in Kommunikationsverbindung stehende drahtlose Kommunikationsschnittstelle (6) zum Erzeugen einer drahtlosen Kommunikationsverbindung zwischen der Datenverarbeitungseinheit (4) und wenigstens einer externen Peripherie-Komponente (21);
- wenigstens eine mit der Datenverarbeitungseinheit (4) in Kommunikationsverbindung stehende drahtgebundene Kommunikationsschnittstelle (7) zum Erzeugen einer drahtgebundenen Kommunikationsverbindung zwischen der Datenverarbeitungseinheit (4) und wenigstens einer externen Peripherie-Komponente (21) oder einem externen Netzwerk (25);
- einen an eine externe elektrische Energieversorgung (26) anschließbarer Versorgungsanschluss (9) zum Versorgen zumindest der Datenverarbeitungseinheit (4) mit externer elektrischer Energie;
- einen wiederaufladbaren Batteriespeicher (10) zum Speichern von elektrischer Energie zumindest für die Datenverarbeitungseinheit (4),
- wobei die Anordnung (20) wenigstens eine vom Benutzer separat zur modularen Kommunikations- und Datenverarbeitungseinrichtung (1) am Körper mitführbare Peripherie-Komponente (21) umfasst, welche über die drahtlose Kommunikationsschnittstelle (6) oder über die drahtgebundene Kommunikationsschnittstelle (7) mit der Datenverarbeitungseinheit (4) in Kommunikationsverbindung steht,
- wobei die Einrichtung (1) eine zumindest teilweise am Gehäuse (2) ausgebildete Benutzerschnittstelle (11) aufweist, die mit der Datenverarbeitungseinheit (4) zur Benutzerinteraktion in Kommunikationsverbindung steht,
**dadurch gekennzeichnet, dass**
- das von der Datenverarbeitungseinheit (4) ausführbare Computerprogrammprodukt so konfiguriert ist, dass es die Kommunikation der Datenverarbeitungseinheit (4) mit der in Kommunikationsverbindung stehenden wenigstens einen Peripherie-Komponente (21) steuert, und dass
- die Benutzerschnittstelle (11) eine am Gehäuse (2) vorgesehene Anzeigeeinrichtung (12) umfasst, mittels welcher wenigstens ein den Betriebszustand der Einrichtung (1), insbesondere der Datenverarbeitungseinheit (4), charakterisierender Parameter angezeigt werden kann oder angezeigt wird, und dass
- zumindest ein angezeigter Parameter die Kommunikationsverbindung der Einrichtung (1) mit wenigstens einer Peripherie-Komponente (21) charakterisiert.

2. Anordnung (20) nach Anspruch 1,
wobei die Anordnung (20) ein mit der modularen Kommunikations- und Datenverarbeitungseinrichtung (1) zur Datenübertragung, insbesondere drahtlos oder drahtgebunden, verbindbares, stationäre Datenverarbeitungssystem (22) aufweist.

3. Anordnung (20) nach Anspruch 1 oder 2,
wobei
die wenigstens eine Peripherie-Komponente (21) wenigstens eines der Folgenden ist oder umfasst:
- ein autonomes oder nicht-autonomes Display, insbesondere ein Touch-Display oder E-Ink-Display;
- ein Smart Glass;
- eine Smart Watch;
- eine Kamera;
- einen Lautsprecher;
- ein Hör-Sprechsystem;
- ein Sensorsystem mit wenigstens einem Sensor zum Erfassen von Sensordaten;
- eine Antenne;
- ein "Energy Harvest" System;

4. Anordnung nach einem der vorhergehenden Ansprüche,
wobei zumindest ein Parameter einen oder mehrere der folgenden Betriebszustände charakterisiert:
- eine Kommunikationsverbindung der Einrichtung (1) bzw. der Datenverarbeitungseinheit (4) mit einem externen Netzwerk;
- einen momentanen Ladezustand des wiederaufladbaren Batteriespeichers (10);
- eine Netzwerkverbindung der Einrichtung (1) mit einem externen Netzwerk;

5. Anordnung nach einem der vorhergehenden Ansprüche,
wobei die Benutzerschnittstelle (11) eine am Gehäuse (2) vorgesehene Eingabeeinrichtung (13) umfasst, mittels welcher die Einrichtung (1) vom Benutzer steuerbar ist.

6. Anordnung nach Anspruch 5,
wobei die Eingabeeinrichtung (13) wenigstens ein vom Benutzer konfigurierbares Betätigungselement (14) umfasst, so dass durch Betätigung des Betätigungselements (14) ein Eingabesignal erzeugt wird, welches von der Eingabeeinrichtung (13) an die Datenverarbeitungseinheit (4) übertragbar ist.

7. Anordnung nach einem der vorhergehenden Ansprüche,
wobei
- die wenigstens eine drahtlose Kommunikationsschnittstelle (6) eine WLAN- oder/und Bluetooth-Schnittstelle (6b, 6a) ist oder umfasst;
- die drahtgebundene Kommunikationsschnittstelle (7) eine Ethernet-Schnittstelle (8) ist oder umfasst.

## Claims

1. An assembly (20),
- with a portable modular communication and data-processing apparatus (1) having computer functionality and capable of being carried on a user's body, comprising:
- a housing (2) delimiting a housing interior (3), wherein the following are arranged in the housing interior (3) and/or on the housing (2):
- a data processing unit (4) which comprises a control unit (5a) and a storage unit (5b) on which a computer program product can be run;
- at least one wireless communication interface (6) in communication connection with the data processing unit (4) to establish a wireless communication connection between the data processing unit (4) and at least one external peripheral component (21);
- at least one wired communication interface (7) in communication connection with the data processing unit (4) to establish a wired communication connection between the data processing unit (4) and at least one external peripheral component (21) or an external network (25);
- a supply connection (9) which can be connected to an external electrical power supply (26) to supply at least the data processing unit (4) with external electrical energy;
- a rechargeable battery store (10) for storing electrical energy at least for the data processing unit (4),
- wherein the assembly (20) comprises at least one peripheral component (21) which can be carried on the user's body separately from the modular communication and data-processing apparatus (1) and which is in communication connection with the data processing unit (4) via the wireless communication interface (6) or via the wired communication interface (7),
- wherein the apparatus (1) has a user interface (11) formed at least partly on the housing (2), the user interface being in communication connection with the data processing unit (4) for user interaction, **characterized in that**
- the computer program product executable by the data processing unit (4) is configured to control the communication of the data processing unit (4) with the at least one peripheral component (21) having the communication connection, and **in that**
- the user interface (11) comprises a display apparatus (12) which is provided on the housing (2) and by means of which at least one parameter characterizing the operating state of the apparatus (1), in particular of the data processing unit (4), can be or is displayed, and **in that**
- at least one displayed parameter characterizes the communication connection of the apparatus (1) with at least one peripheral component (21).

2. The assembly (20) according to claim 1,
wherein the assembly (20) has a stationary data processing system (22) which is connectable to the modular communication and data-processing apparatus (1) for data transmission, in particular wirelessly or by wired means.

3. The assembly (20) according to claim 1 or 2,
wherein the at least one peripheral component (21) is or comprises at least one of the following:
- an autonomous or non-autonomous display, in particular a touch display or e-ink display;
- a smart glass;
- a smartwatch;
- a camera;
- a loudspeaker;
- a hearing and speaking system;
- a sensor system with at least one sensor for capturing sensor data;
- an antenna;
- an energy harvesting system.

4. The assembly according to any one of the preceding claims,
wherein at least one parameter characterizes one or more of the following operating states:
- a communication connection of the apparatus (1) or the data processing unit (4) with an external network;
- a current charge state of the rechargeable battery store (10);
- a network connection of the apparatus (1) with an external network.

5. The assembly according to any one of the preceding claims,
wherein the user interface (11) comprises an input apparatus (13) which is provided on the housing (2) and by means of which the apparatus (1) can be controlled by the user.

6. The assembly according to claim 5,
wherein the input apparatus (13) comprises at least one actuation element (14) that is configurable by the user such that, when the actuation element (14) is actuated, an input signal is generated which can be transmitted from the input apparatus (13) to the data processing unit (4).

7. The assembly according to any one of the preceding claims,
wherein
- the at least one wireless communication interface (6) is or comprises a WLAN interface and/or a Bluetooth interface (6b, 6a);
- the wired communication interface (7) is or comprises an Ethernet interface (8).

## Revendications

1. Agencement (20),
- avec un appareil de communication et de traitement de données (1) modulaire portable pouvant être transporté par un utilisateur, avec une fonctionnalité informatique, comprenant :
- un boîtier (2) délimitant un espace intérieur de boîtier (3), dans lequel sont disposés dans l'espace intérieur de boîtier (3) et/ou sur le boîtier (2) :
- une unité de traitement de données (4), laquelle comprend une unité de commande (5a) et une unité de mémoire (5b), dans laquelle un produit de programme informatique peut être exécuté ;
- au moins une interface de communication sans fil (6) en connexion de communication avec l'unité de traitement de données (4) pour générer une connexion de communication sans fil entre l'unité de traitement de données (4) et au moins un composant périphérique externe (21) ;
- au moins une interface de communication filaire (7) en connexion de communication avec l'unité de traitement de données (4) pour générer une connexion de communication filaire entre l'unité de traitement de données (4) et au moins un composant périphérique externe (21) ou un réseau externe (25) ;
- un raccord d'alimentation (9) pouvant être raccordé à une alimentation en énergie électrique externe (26) pour alimenter au moins l'unité de traitement de données (4) en énergie électrique externe ;
- un accumulateur à batterie rechargeable (10) pour stocker de l'énergie électrique au moins pour l'unité de traitement de données (4),
- dans lequel l'agencement (20) comprend au moins un composant périphérique (21) pouvant être transporté par l'utilisateur séparément de l'appareil de communication et de traitement de données (1) modulaire, lequel est en connexion de communication avec l'unité de traitement de données (4) par l'intermédiaire de l'interface de communication sans fil (6) ou par l'intermédiaire de l'interface de communication filaire (7),
- dans lequel l'appareil (1) présente une interface utilisateur (11) formée au moins partiellement sur le boîtier (2), qui est en connexion de communication avec l'unité de traitement de données (4) pour l'interaction avec l'utilisateur, **caractérisé en ce que**
- le produit de programme informatique exécutable par l'unité de traitement de données (4) est configuré de sorte que la communication de l'unité de traitement de données (4) est commandée avec l'au moins un composant périphérique (21) en connexion de communication, et que
- l'interface utilisateur (11) comprend un appareil d'affichage (12) prévu sur le boîtier (2), au moyen duquel au moins un paramètre caractérisant l'état de fonctionnement de l'appareil (1), en particulier de l'unité de traitement de données (4), peut être affiché ou est affiché, et que
- au moins un paramètre affiché caractérise la connexion de communication de l'appareil (1) avec au moins un composant périphérique (21).

2. Agencement (20) selon la revendication 1,
dans lequel l'agencement (20) présente un système de traitement de données (22) stationnaire pouvant être connecté à l'appareil de communication et de traitement de données (1) modulaire pour la transmission de données, en particulier sans fil ou filaire.

3. Agencement (20) selon la revendication 1 ou 2,
dans lequel l'au moins un composant périphérique (21) est ou comprend au moins un de ce qui suit :
- un écran autonome ou non autonome, en particulier un écran tactile ou écran E-Ink ;
- des lunettes intelligentes ;
- une montre intelligente ;
- une caméra ;
- un haut-parleur ;
- un système d'écoute et de conversation ;
- un système de capteur avec au moins un capteur pour détecter des données de capteur ;
- une antenne ;
- un système « Energy Harvest ».

4. Agencement selon l'une quelconque des revendications précédentes,
dans lequel au moins un paramètre caractérise un ou plusieurs des états de fonctionnement suivants :
- une connexion de communication de l'appareil (1) ou de l'unité de traitement de données (4) avec un réseau externe ;
- un état de charge instantané de l'accumulateur à batterie rechargeable (10) ;
- une connexion réseau de l'appareil (1) à un réseau externe.

5. Agencement selon l'une quelconque des revendications précédentes,
dans lequel l'interface utilisateur (11) comprend un appareil de saisie (13) prévu sur le boîtier (2), au moyen duquel l'appareil (1) peut être commandé par l'utilisateur.

6. Agencement selon la revendication 5,
dans lequel l'appareil de saisie (13) comprend au moins un élément d'actionnement (14) configurable par l'utilisateur, de sorte qu'un signal de saisie, lequel peut être transmis par l'appareil de saisie (13) à l'unité de traitement de données (4), est généré par l'actionnement de l'élément d'actionnement (14).

7. Agencement selon l'une quelconque des revendications précédentes,
dans lequel
- l'au moins une interface de communication sans fil (6) est ou comprend une interface Wi-Fi et/ou Bluetooth (6b, 6a) ;
- l'interface de communication filaire (7) est ou comprend une interface Ethernet (8).
